# EUROPEAN PATENT APPLICATION

(11) **EP 2 642 266 A1**
(43) Date of publication of application: **25.09.2013**
(21) Application number: 11841122.2
(22) Date of filing: 29.09.2011
(51) Int. Cl.: G01M 3/20, F04D 19/04

(54) **LEAK DETECTOR**

(30) Priority: 16.11.2010 JP 2010256030
(71) Applicant: ULVAC, Inc., Chigasaki-shi, Kanagawa 253-8543 (JP)
(72) Inventor: MATSUMOTO, Yoshikazu, Chigasaki-shi Kanagawa 253-8543 (JP); SETO, Norimasa, Chigasaki-shi Kanagawa 253-8543 (JP); NAKAMURA, Daisuke, Chigasaki-shi Kanagawa 253-8543 (JP); MAEDA, Akihiro, Chigasaki-shi Kanagawa 253-8543 (JP)
(74) Representative: Epping - Hermann - Fischer
(86) International application number: PCT/JP2011/005491
(87) International publication number: WO 2012/066715

(57) **Abstract**

Provided is a convenient leak detector which has high detection sensitivity and can quickly start a leak test after the start of vacuuming a test piece, without impairing the capabilities such as fast response to helium gas.

The leak detector includes a mass spectrometer tube 2 configured to detect a search gas and a turbo-molecule pump 3 which has a plurality of stages rotors 33 and stators 34 alternately arranged in a housing 31, the rotors 33 attached to a rotary shaft 32, and includes a drive source 35 configured to rotationally drive the rotary shaft. An intake port 36 communicating with a test piece TP and a connection port 37 to which the mass spectrometer tube is connected are opened at positions away from each other in a wall surface 31a of the housing, the wall surface 31a facing a rotor 33a of the uppermost stage. The intake port of the turbo-molecule pump is connected to the test piece through a connection pipe, and leak detection is performed by causing the search gas to enter the mass spectrometer tube from inside of the test piece.

## Description

### TECHNICAL FIELD

The present invention relates to a leak detector, and to a convenient leak detector capable of quickly starting leak detection.

### BACKGROUND ART

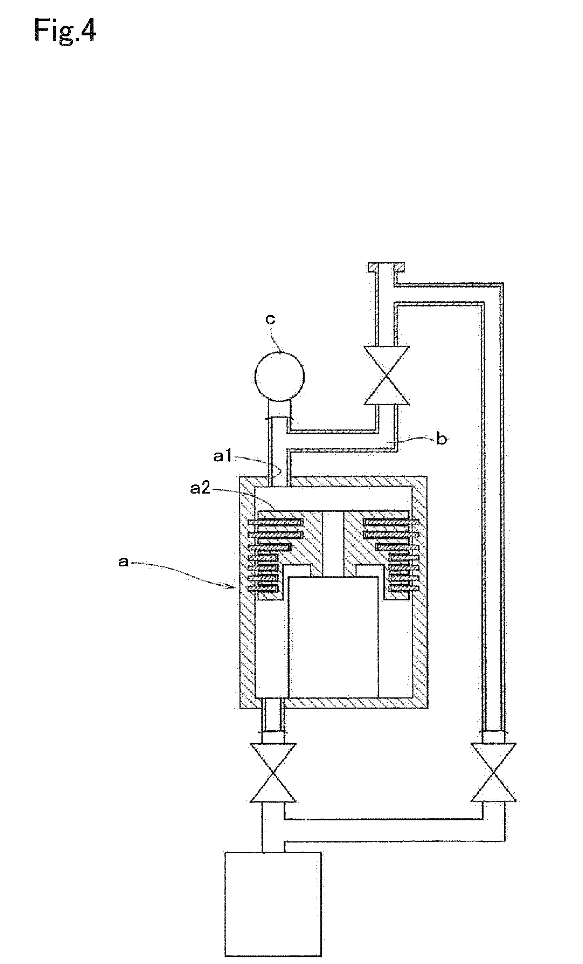

A leak detector is conventionally known to be used for leak detection (a leak test) to detect whether a test piece, such as an airtight container, a pipe, or a valve, has a minute leak or not. A generally-used leak detector of this type includes: a mass spectrometer tube which can quantitatively detect, as an ionic current, a search gas leaking in vacuum; a turbo-molecule pump which has a plurality of stages of rotors and stators alternately arranged in a housing, the rotor being attached to a rotary shaft, and which includes a drive source configured to rotationally drive the rotary shaft; and a fore pump provided on the back pressure side of the turbo-molecule pump. In such a leak detector, as shown in Fig. 4, an end portion of a primary passage b leading to an intake port a1 of a turbo-molecule pump a and a test piece (not shown) are connected to each other through a connection pipe, and a mass spectrometer tube c is interposingly provided in the primary passage b. Such a leak detector is described in Patent Document 1, for example.

The intake port a1 of the turbo-molecule pump a is usually provided facing a rotor a2 of the uppermost stage (i.e., at a position where the turbo-molecule pump a has a highest pumping speed). Since the mass spectrometer tube c is in the primary passage b through which a search gas, such as helium, flows after being introduced into a test port of the test piece, this leak detector has an advantage of having high detection sensitivity and of responding quickly to the helium gas.

However, this conventional example has the following problem. Specifically, the mass spectrometer tube c and the intake port a1 communicate with each other and therefore have no pressure difference therebetween. Because of this structure, a leak test cannot be started until the pressure of the intake port a1 reaches a pressure which allows the mass spectrometer tube c to perform the measurement operation. Due to this problem, when a test piece is such a large volume as to require a long time to vacuum the inside of the test piece, it takes time to start a leak test. This is very inconvenient.

### PRIOR ART DOCUMENT

### PATENT DOCUMENT

Patent Document 1: Japanese Patent No. 2655315

### SUMMARY OF THE INVENTION

### PROBLEM TO BE SOLVED BY THE INVENTION

The present invention has been made in consideration of the above problem, and has an objective to provide a convenient leak detector which has high detection sensitivity and can quickly start a leak test after the start of vacuuming a test piece, without impairing the capabilities such as fast response to helium gas.

### MEANS FOR SOLVING THE PROBLEM

In order to solve the above problem, the present invention provide a leak detector including a mass spectrometer tube configured to detect a search gas and a turbo-molecule pump which has a plurality of stages of rotors and stators alternately arranged in a housing, the rotors attached to a rotary shaft, and which includes a drive source configured to rotationally drive the rotary shaft, an intake port of the turbo-molecule pump being connected to a test piece through a connection pipe, the leak detector configured to perform leak detection by causing the search gas to enter the mass spectrometer tube from inside of the test piece, wherein the intake port communicating with the test piece and a connection port to which the mass spectrometer tube is connected are opened at positions away from each other in a wall surface of the housing, the wall surface facing one of the rotors which is located at a highest vacuum side.

According to the present invention, prior to a leak test, a test port of the test piece and the intake port of the leak detector (or an end portion of a primary passage extending from the intake port) are connected to each other through the connection pipe. Next, the turbo-molecule pump is activated (generally, a fore pump is provided on the back pressure side of the turbo-molecule pump, and the test piece is roughly vacuumed through this fore pump. If a vacuum pump is provided to the test piece, this vacuum pump may be activated.) to roughly vacuum the test piece. At the same time, the mass spectrometer tube is also vacuumed. In the present invention, the intake port and the connection port are arranged away from each other in the wall surface of the housing of the turbo-molecule pump, the wall surface facing the rotor at the highest vacuum side (e.g., which is, in a case of a turbo-molecular pump in which each blade constituting the rotors extend radially outward from the rotary shaft, a rotor of the uppermost stage, where the direction from the drive source to the rotor is regarded as upward). Accordingly, the conductance of the space between an inner side of the wall surface and the rotor located at the highest vacuum side generates a pressure difference between the intake port and the connection port (i.e., the connection port has a lower pressure than the intake port). Accordingly, once the pressure inside the mass spectrometer tube reaches a pressure which allows measurement operation, a leak test can be started, irrespective of the pressure of the intake port and further the pressure inside the test piece.

The leak test starts when a vacuum gauge provided to the connection port reaches a predetermined value, for example. Here, helium gas as the search gas is sprayed locally onto the test piece from the outside. If the test piece has a leak, the helium gas is sucked into the test piece, and is guided to the intake port of the turbo-molecule pump through the connection pipe. Here, among the components of the gas introduced from the test piece to the intake port of the turbo-molecule pump, components, such as nitrogen and oxygen, which are largely included in the atmosphere have low diffusivity in the space between the above-described inner side of the wall surface and the rotor located at the highest vacuum side, and are therefore discharged by the rotor located at the highest vacuum side.

On the other hand, the helium gas or the like generally used as a search gas is lighter than nitrogen and oxygen, and therefore has a high average speed after being introduced into the above-described space. For this reason, the search gas has high diffusivity in this space, so that much of the search gas can reach the mass spectrometer tube through the intake port. As a result, reliable leak detection having high detection sensitivity can be accomplished without impairing the capabilities such as fast response to helium gas.

In the present invention, the leak detector is configured such that conductance between the intake port and the connection port is 1/10 or less of an effective pumping speed of the intake port. According to this, the intake port and the connection port can have a pressure difference of at least one or more digits therebetween, allowing the leak test to be started quickly after the start of vacuuming the test piece. In this case, the conductance of the above-described space can be adjusted by appropriately setting the values of, for example, the volume of the space (e.g., the distance between an inner surface of the chassis and the rotor of the uppermost stage), the opening size of each of the connection port and the intake port, and the distance between the hole axes of the connection port and the intake port, in consideration of the pumping speed of the turbo-molecule pump itself or the type of gas used.

### BRIEF DESCRIPTION OF THE DRAWINGS

[Fig. 1] Fig. 1 is a diagram schematically showing the configuration of a leak detector of the present invention.
[Fig. 2] Fig. 2 is a cross-sectional view along line II-II of Fig. 1.
[Fig. 3] Fig. 3 is a graph showing a result of an experiment.
[Fig. 4] Fig. 4 is a diagram schematically showing the configuration of a leak detector of a conventional example.

### MODE FOR CARRYING OUT THE INVENTION

With reference to the drawings, a leak detector according to an embodiment of the present invention is described below. The leak detector is configured to detect presence of a minute leak from a test piece TP such as an airtight container including a vacuum chamber of a vacuum treatment apparatus, a pipe, or a valve.

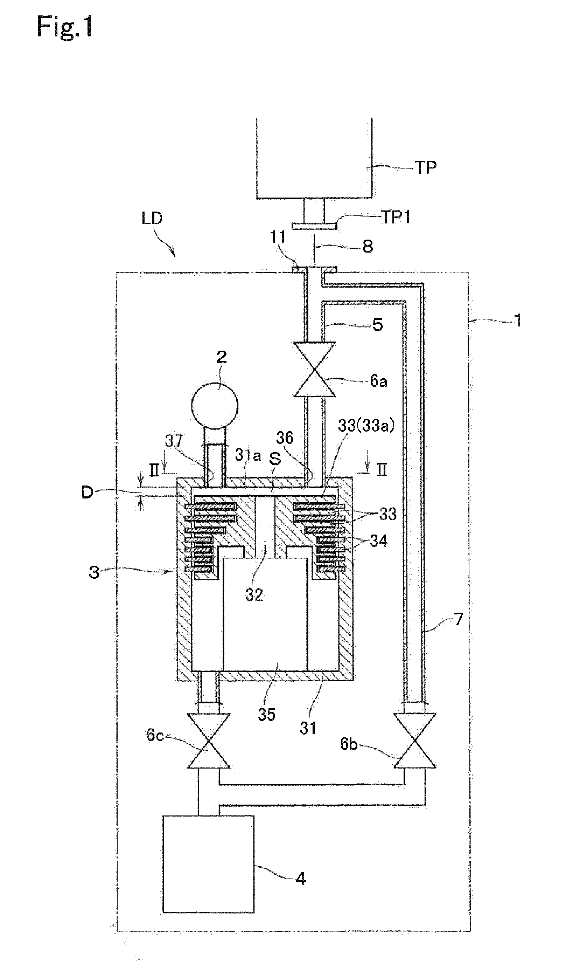

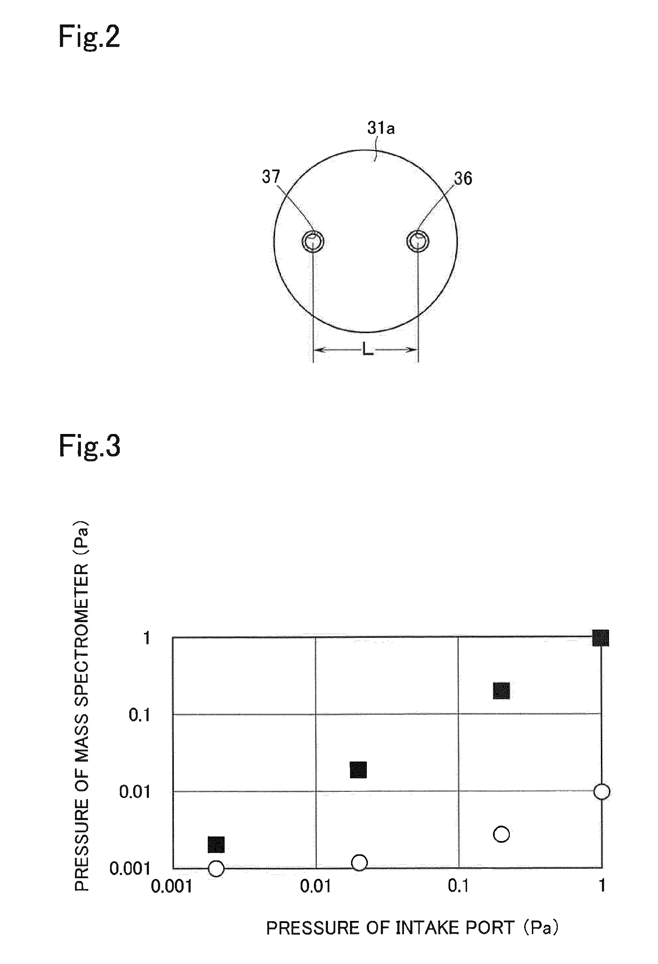

Referring to Figs. 1 and 2, a leak detector LD includes a chassis 1, and inside the chassis 1, includes a mass spectrometer tube 2, a turbo-molecular pump 3, and a fore pump 4 provided at the back-pressure side of the turbo-molecular pump 3. One having the following configuration can be used as the turbo-molecule pump 3. Specifically, inside a housing 31, the turbo-molecule pump 3 has a plurality of stages of rotors 33 and stators 34 alternately arranged, the rotors 33 is attached to a rotary shaft 32, and the rotary shaft 32 is rotationally driven by a drive source 35. Descriptions will be given below assuming that the direction from the drive source 35 to the rotors 33 is upward (an up-down direction in Fig. 1). In this case, when the turbo-molecule pump 3 having the above configuration is in operation, a rotor 33a of the uppermost stage is at the highest vacuum side. Note that a known turbo-molecule pump can be used as the turbo-molecule pump 3, but as will be described later, the turbo-molecule pump 3 is different from the known one in that the interval between the rotor 33a of the uppermost stage and a wall surface 31a of the housing 31 facing the rotor 33a is set to a predetermined value. Further, there is no particular limitation on the fore pump 4 either, and a rotary pump or the like can be used.

The wall surface 31a of the housing 31 facing the rotor 33a of the uppermost stage (namely, a top surface of the housing facing the rotor 33a located at the highest vacuum side) is provided with an intake port 36 having a predetermined opening size at a position radially shifted to one side from the axis of the rotary shaft 32 (see Fig. 2). The intake port 36 is connected with a main passage 5 leading to a flanged port 11 provided in a top surface of the chassis 1. An electromagnetic on-off valve 6a is interposingly provided in the main passage 5, and a sub passage 7 is connected to the primary passage 5 at a position between the electromagnetic on-off valve 6a and the port 11. Another electromagnetic on-off valve 6b is interposingly provided in the sub passage 7 which is connected to the fore pump 4. Reference numeral 6c in Fig. 1 indicates yet another electromagnetic on-off valve 6c which opens and closes the path between the turbo-molecule pump 3 and the fore pump 4.

A connection port 37 is provided to the wall surface 31a of the housing 31 at a position symmetric to the intake port 36 with respect to the axis of the rotary shaft 32. The mass spectrometer tube 2 is attached to this connection port 37. For example, a mass spectrometer tube of magnetic field deflection type can be used as the mass spectrometer tube. In this case, although not particularly illustrated, the mass spectrometer tube 2 includes: an ion source which has a filament and a grid and ionizes inside gas components; an ion collector which collects helium ions; and a magnet with which only the helium ions out of positive ions generated by the ion source are attracted to the ion collector. Then, ionic current flowing through the ion collector is detected by an ammeter (not shown) provided along the ion collector. The mass spectrometer tube 2 of the present embodiment is provided with another ion collector around the ion source, which ion collector serves as an ionization vacuum gauge for measuring the total pressure inside the mass spectrometer tube 2 as well. Note that the mass spectrometer tube 2 is not limited to the above-described one, but can employ other configurations, and further, the vacuum gauge may be provided separately.

Overall control of operations and the like of the parts described above can be performed by control means (not shown) including a computer , a sequencer or the like. In this case, the control means is provided with storage means such as a ROM storing in advance a computation chart for computing a leak value based on the ionic current, a control program (an operation sequence) for the leak detector LD used during a leak test, and the like. A description is given below of how the leak detector LD of the present embodiment performs a leak test on the test piece TP using helium as a search gas.

First, with only the on-off valve 6c open and the other on-off valves 6a, 6b closed, the turbo-molecule pump 3 and the fore pump 4 are activated to put the leak detector LD in its standby mode. In this state, the port 11 of the leak detector LD and a test port TP1 of the test piece TP are connected to each other via a connection pipe 8. Next, with the on-off valve 6c closed and the on-off valve 6b open, the test piece TP is roughly vacuumed through the connection pipe 8. The internal pressure of the sub passage 7 is measured using a Pirani gauge (not shown), and once the test piece TP is vacuumed to a predetermined pressure, the on-off valves 6c, 6a are sequentially opened to vacuum the test piece TP mainly with the turbo-molecule pump 3.

In the present embodiment, the intake port 36 and the connection port 37 leading to the mass spectrometer tube 2 are arranged away from each other in the wall surface 31a of the housing 31 of the turbo-molecule pump 3 with a predetermined interval therebetween. Accordingly, conductance of a space S existing between an inner surface of the wall surface 31a and the rotor 33a of the uppermost stage generates a pressure difference between the intake port 36 and the connection port 37 (i.e., the connection port 37 has a lower pressure than the intake port 36). In this case, the intake port 36 and the connection port 37 can have a pressure difference of at least one or more digits therebetween by making conductance C between the intake port 36 and the connection port 37 which communicate with the space S is a tenth or less of an effective pumping speed S' of the intake port 36.

The conductance of the space S can be desirably adjusted by appropriately setting the values of, for example, the volume of the space (so that an interval D between the inner surface of the housing 31 and the rotor 33a of the uppermost stage would preferably be 5 mm or less), the opening size of each of the intake port 36 and the connection port 37 (e.g., 7 mm or above for a port having a pumping speed of 70L/s for example), a distance L between the hole axes of the intake port 36 and the connection port 37 (preferably 50 mm or above for a port having the same pumping speed as above), and the like.

Specifically, in a turbo-molecular pump having a pumping speed S of 70L/s, when the opening size of each of the intake port 36 and the connection port 37 is set to φ7 mm, the distance L between their hole axes is set to 50 mm, the interval D is set to 2 mm, the conductance C between the intake port 36 and the connection port 37 communicating with the space S is estimated to be about 0.2 L/s, in a model of molecular flow conductance Ct between two thin parallel plates. Then, calculating from a synthesis formula of the conductance C: 1/S'=1/S+1/C, the effective pumping speed S' of the intake port 36 is estimated to be 10 L/s or above. Accordingly, the conductance C is 2% or less of the effective pumping speed S' of the intake port, and as a result, the pressure of the connection port 37 can be maintained at 2% or less, namely, 1/50 or less of the pressure of the intake port 36. In other words, gas can be introduced under a pressure 50 times the operation pressure of the mass spectrometer tube 2. Further, as can be seen from the above, in order to speed up the start of the leak test of the test piece TP, the conductance may be reduced as much as possible.

Next, when the pressure measured by the mass spectrometer tube 2 reaches a predetermined value (in the current case, the pressure of the intake port 36 is higher than the pressure of the connection port 37 by one or more digits), helium gas is sprayed onto the test piece TP from outside by using a spray gun or the like. At this time, when the test piece TP has a leak, the helium gas is sucked into the test piece TP through a portion of the leak, passes through the connection pipe 8 and the main passage 5, and then drawn into the turbo-molecule pump 3 through the intake port 36.

Here, among the components of the gas introduced into the intake port 36 of the turbo-molecule pump 3 from the inside of the test piece TP, components, such as nitrogen and oxygen, largely included in the atmosphere have low diffusivity in the space S, and are therefore discharged by the rotor 33a of the uppermost stage. On the other hand, the helium gas as the search gas is lighter than nitrogen and oxygen, therefore has a high average speed after being introduced into the space S, and has high diffusivity. Accordingly, much of the helium gas reach the mass spectrometer tube 2 through the connection port 37. As a result, reliable leak detection with high detection sensitivity can be accomplished without impairing the capabilities such as fast response to helium gas.

As described above, according to the present embodiment, a leak test can be started when the internal pressure of the mass spectrometer tube 2 reaches a pressure which allows measurement operation, irrespective of the pressure of the intake port 36 and further the pressure of the test piece TP. Consequently, compared to the conventional example described earlier, a leak test can be started quickly after the start of vacuuming the test piece. Moreover, reliable leak detection with high detection sensitivity can be accomplished without impairing the capabilities such as fast response to helium gas.

Next, an experiment was performed to confirm the generation of a pressure difference between the intake port 36 and the connection port 37. Using a leak detector (of the present invention) shown in Fig. 1, which includes a turbo-molecule pump having a nitrogen-gas pumping speed of 70 L/s, and in which the distance between an intake port and a connection port is 35 mm, and the interval between a wall surface of a housing and a rotor is 1 mm, the pressure of the intake port and the pressure of a mass spectrometer tube were measured.

As a comparative experiment, using a (conventional) leak detector shown in Fig. 4 which includes a turbo-molecule pump having a nitrogen-gas pumping speed of 70 L/s, the pressure of the intake port and the pressure of a mass spectrometer tube were measured. Fig. 3 shows a graph indicating the pressure relationships between the intake port and the mass spectrometer tube. In Fig. 3, square points indicate the conventional leak detector, and circular points indicate the leak detector of the present invention. According to the graph, it was confirmed in the conventional leak detector that the mass spectrometer tube and the intake port had almost no pressure difference therebetween because they communicated with each other. In contrast, it was confirmed in the leak detector of the present invention that the pressure of the mass spectrometer tube was about 1/100 of the pressure of the intake port, and therefore a pressure difference was effectively generated between the intake port 36 and the connection port 37.

Although the leak detection according to the embodiment of the present invention has been described above, the present invention is not limited to the above mode. For example, the intake port and the connection port do not have to be symmetric to each other, and their positions can be changed appropriately as long as desired conductance can be obtained. Further, the present embodiment has been described with an example of the turbo-molecule pump in which each blade constituting the rotors is provided radially outward from the cylindrical rotary shaft. However, the present invention can be applied to a leak detector having a turbo-molecule pump in which the blades constituting the rotors are provided along the generating line of the cylindrical rotary shaft. In this case, too, the intake port and the connection port may be opened in a wall surface of the housing of the turbo-molecule pump at positions away from each other, the wall surface being located at the highest vacuum side. Further, although the present embodiment has been described with an example in which parts are integrally included in the chassis, the leak detector is not limited to such mode.

### EXPLANATION OF REFERENCE NUMERALS

- LD: leak detector
- 2: mass spectrometer tube
- 3: turbo-molecule pump
- 31: housing
- 32: rotary shaft
- 33: rotor
- 33a: rotor of an uppermost stage
- 34: stator
- 35: drive source
- 36: intake port
- 37: connection port
- 5: primary passage (connection pipe)
- 8: connection pipe
- TP: test piece

## Claims

1. A leak detector including:
a mass spectrometer tube configured to detect a search gas; and
a turbo-molecule pump which has a plurality of stages of rotors and stators alternately arranged inside a housing, the rotors being attached to a rotary shaft,
and which includes a drive source configured to rotationally drive the rotary shaft;
an intake port of the turbo-molecule pump being connected to a test piece through a connection pipe, the leak detector configured to perform leak detection by causing the search gas to enter the mass spectrometer tube from inside of the test piece, wherein
the intake port communicating with the test piece and a connection port to which the mass spectrometer tube is connected are opened at positions away from each other in a wall surface of the housing, the wall surface facing one of the rotors which is located at a highest vacuum side.

2. The leak detector according to claim 1, wherein
conductance between the intake port and the connection port is 1/10 or less of an effective pumping speed of the intake port.
